Europäisches Patentamt

European Patent Office

Office européen des brevets

(11) Publication number: **0 115 220**
**B1**

(12) # EUROPEAN PATENT SPECIFICATION

(45) Date of publication of patent specification: **06.04.88**

(51) Int. Cl.⁴: **H 02 G 15/076,** H 02 G 15/04

(21) Application number: **83308010.4**

(22) Date of filing: **23.12.83**

(54) **A process for producing a pressuretight cable termination.**

(30) Priority: **30.12.82 DE 3248729**

(43) Date of publication of application:
**08.08.84 Bulletin 84/32**

(45) Publication of the grant of the patent:
**06.04.88 Bulletin 88/14**

(84) Designated Contracting States:
**AT BE CH FR GB IT LI NL SE**

(56) References cited:
**DE-A-1 806 783**
**DE-A-1 963 730**
**FR-A-2 427 718**
**GB-A-2 021 879**

(73) Proprietor: **MINNESOTA MINING AND MANUFACTURING COMPANY**
**3M Center, P.O. Box 33427**
**St. Paul, Minnesota 55133-3427 (US)**

(72) Inventor: **Heucke, Karl c/o Minnesota Mining and Man. Company**
**2501 Hudson Road P.O. Box 33427**
**St. Paul Minnesota 55133 (US)**

(74) Representative: **Baillie, Iain Cameron et al**
**c/o Ladas & Parry Isartorplatz 5**
**D-8000 München 2 (DE)**

Courier Press, Leamington Spa, England.

## Description

This invention relates to a process for producing a pressuretight termination of a multi wire long distance cable and a kit therefor.

In a known process, described in West German Auslegeschrift DE—A—1,963,730, a sheath is sealed at its end near the cable against the cable jacket, and then filled from its other, remote, open end with a free-flowing sealing composition. Compressed air under, for example, about $1.5 \times 10^5$ Pascal (1.5 bar) is then applied to the surface of the introduced sealing composition. As a result, the sealing composition is forced into the cable and into the voids between the wires. Thereafter, it is a matter of waiting for the sealing composition to cure under atmospheric pressure. In order to prevent the sealing composition from being driven too far into the cable as pressure is applied to the sealing composition, the cable is constricted at a distance of about 10 cm from the end of the trimmed-back cable jacket.

This known process requires special implements for applying the pressure and, furthermore, has the disadvantage that it takes a relatively long time for the sealing agent to harden and, thus, a relatively long time before the cable can be put under gas pressure again. It is therefore customary in practice to use pre-manufactured terminations on pieces of cable which are, for example, 6 or 10 m long. These have to be stocked as special components and need to be transported to the site of use. In many cases these premanufactured cable end sections are not long enough to reach from the desired installation point of the termination (for example in a telephone distribution box) to an already existing connection point on a prelaid main cable, for example on a cable joint provided in a manhole. It is then necessary to make a branch of the prelaid main cable at a point which can be reached from the desired installation point of the termination with the length of cable on the premanufactured termination. This branching-off requires extensive work, which, in built-up areas, includes the building of a manhole.

It is the object of this invention to provide a process for quick and labour-saving on-site production of a pressuretight termination of a multi-wire long-distance cable which can be put under gas pressure.

According to the invention this object is achieved by providing a process for producing a pressuretight termination of a multi-wire long-distance cable which can be put under gas pressure and which cable has a sealing cable jacket, the process including removing part of the cable jacket to form a transition zone which contains an end of the partially removed cable jacket and a section of exposed wires emerging from the cable jacket, providing is curable sealing composition that is curable at an increased rate upon application of heat on the bared wires in a flexible sheath which sheath is arranged on the cable jacket, and is sealed thereon, applying pressure on the sealing composition in the direction of the cable and curing the sealing composition, characterised in that the sheath is made of a heat-shrinkable material, the sheath is sealed against the bundle of wires at an end section remote from the cable jacket and is then shrunk onto the section of wires and the sealing composition thereon by the application of heat.

In the process according to the invention, the single step of shrinking on a premanufactured sheath not only puts the sealing composition under pressure in the desired manner in the direction of the cable and thereby drives it into any voids, but also, as a result of the heat supplied in the course of shrinking, effects higher-rate curing of the sealing composition, so that the cable can be put under gas pressure again shortly after the sheath has been shrunk thereon. Usually, the sealing composition is already sufficiently hard when it has cooled down. The cable can thus again be put under gas pressure, and taken into operation, immediately after the termination has been produced. With the process according to the invention it is possible to provide the termination as required on any length of cable selected under other criteria. It is, therefore, normally always possible to start with a suitable length of cable in an already existing connection point, for example in an already existing manhole, so that the above-described extensive earthwork for establishing the branching joint is unnecessary. Moreover it is not necessary to stock cable end sections and the separate transport of such end sections to the site of use is similarly not necessary. Since the present invention requires only a few simple steps and does not require special skills, it can be carried out within a short time to a high standard of reliability even by semi-skilled workers. The process according to the invention is particularly simple to effect when use is made of a kit in which are packed together all the components required for producing a termination in accordance with the invention. The use of a kit also makes possible particularly clean and standardised working and ensures consistent results.

It is a further particular advantage of the process according to the invention that, by virtue of using a heat-shrinkable sheath, the sealing of the cable side end of the sheath against the cable jacket is accomplished very simply by heat-shrinking, i.e. by means of the method normally used in the production of the termination. The same also applies to the sealing, against the section (bundle) of wires, of the end of the sheath distant from the cable; this sealing can be accomplished in a simple fashion by heat-shrinking. For this purpose the bundle of wires is advantageously provided with a heat-protective cover in the zone of the end section of the sheath remote from the cable, in order to prevent damage to the insulation on the wires as a result of the temperature increase occurring in the course of heat shrinking. Preferably the heat-protective cover is made of glass fibre tape.

In a particularly advantageous embodiment of the invention, the sheath, which has already been sealed at its ends against the cable and the wire bundle, is progressively shrunk on starting at its end section distant from the cable and going towards the cable side end section. This procedure ensures that the remaining readily free-flowing portion of the sealing composition remains under pressure in the direction of the cable right to the end of the shrinking step.

In many cases it is particularly advantageous to use a thixotropic sealing composition. Such a type of sealing composition can also be used if the sheath has to be arranged with a substantially horizontal axis, so it is therefore not particularly easy to pour liquid sealing composition into the sheath sealed at the cable side end. The thixotropic sealing composition becomes more liquid as a result of the pressure exerted on the sealing composition in the course of the shrinking-on of the sheath and is driven under pressure in the direction of the cable in essentially the same way as a non-thixotropic free-flowing sealing composition.

It is possible to use a very wide variety of sealing compositions, but in particular those which are polyurethane-based. A highly suitable thixotropic polyurethane-based sealing composition is sold by the Minnesota Mining and Manufacturing Company, St. Paul, Minnesota, USA, under the name "Polyurethane resin 9403". If such a sealing composition is used a curing time of 15 minutes is generally adequate; this time is approximately equal to the time the sealing composition takes to cool down after the heat-shrinking. Thixotropic polyurethane sealing compositions of this type are also advantageous insofar as they always produce a uniformly cured product whose quality does not depend on uncontrollable external conditions, such as, for example, the humidity. It will in general be preferable to use such sealing compositions in the form of two-component sealing compositions and to mix the two components together immediately before use as is conventionally known. The use of a two-component sealing composition offers the particular advantage of making it possible to ensure very short curing times.

Depending on the choice of the sealing composition used, it will frequently be possible, in particular if a thixotropic sealing composition is used, not to mount the sheath until the sealing composition has been applied. Such a working method is particularly convenient in the case of pastelike sealing compositions, in particular thixotropic sealing compositions.

It is a further particular advantage of the process according to the invention that the amount of sealing composition and hence the volume of the termination can be kept very small. A particularly small volume for the termination is achieved, after the application of the sealing composition, by compacting the bundle of wires with a packing material through which the sealing composition can penetrate. It is normally sufficient simply to use a string-like packing material, which can be conveniently wrapped round the bundle that has previously been treated with the sealing composition.

Although it is known to use a heat-shrinkable sleeve as described in the above noted West German Auslegeschrift DE—A—1,963,730, in that prior art disclosure, however, the sleeve was short and only arranged in the zone of the cable side end section of the sheath (the sheath not being heat-shrinkable) and was solely intended for the purpose of being shrunk onto the cable side end section to thereby seal that end section against the cable jacket. Thus, in the said prior art disclosure there was no thought of using a heat-shrinkable material for the sheath. It should further be mentioned that a similar short heat-shrinkable sleeve was also used with another known cable termination (West German Auslegeschrift DE—A—2,021,203), but only for the purpose of firmly squeezing together the bundle of wires (which in the disclosure are paper insulated) close to where the wires exit from the cable and thereby ensuring that in the case of an ingress of moisture into this zone a watertight plug of swollen paper insulation is formed. Such disclosure does not suggest the requirements of the present invention.

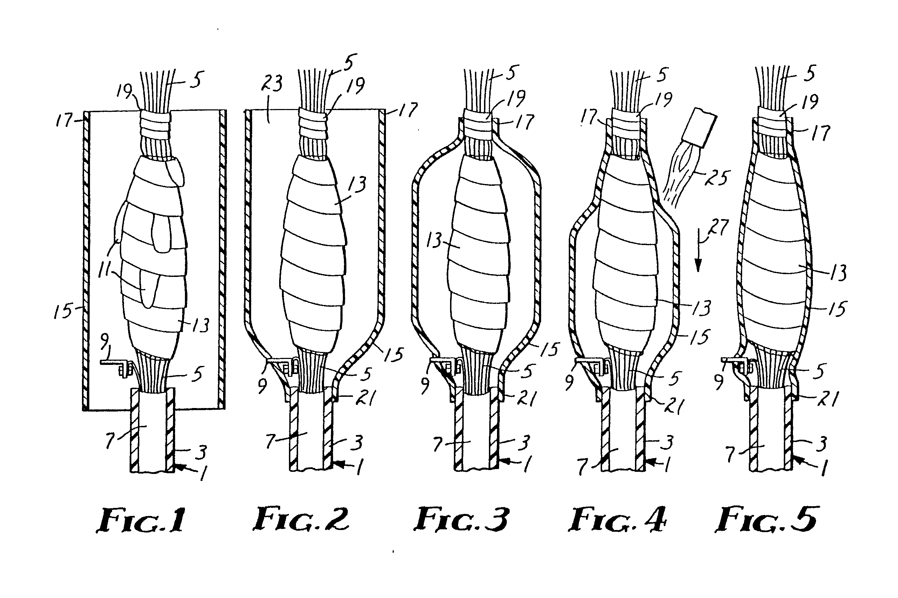

The invention will now be described by way of example with reference to the accompanying drawings in which Figures 1 to 5 inclusive depict, in schematic longitudinal cross-section, various stages of the process according to the invention.

The Figures 1—5 show a multi-wire communications cable 1 which can be put under gas pressure and which contains a sealing cable jacket 3, made, for example, of polyethylene, and a bundle 5 of insulated wires. The depicted cable also has some form of screening or armouring 7. The cable jacket 3 and the armouring 7 (and any other layers surrounding the bundle 5 of wires) are trimmed back to form an end section of desired length on the cable. In the illustrative embodiment depicted, a connection piece 9 is soldered or bolted onto the armouring 7 and projects radially outwards. In the transition zone, which contains the end of the trimmed-back cable jacket and a section of the bared bundle of wires 5 emergent from the cable jacket, a thixotropic sealing composition 11 is applied onto the bundle of wires and is worked in between the wires by a spatula or any other suitable tool. So as to keep the termination volume as small as possible, the bundle of wires to which the sealing composition has been applied is then compacted by winding a stringlike packing material 13 around the sealing composition and removing surplus sealing composition.

The length over which the bared bundle of wires has sealing composition applied thereto naturally depends on the length of a sheath 15 intended for use. In the illustrative embodiment depicted, this sheath is arranged over the transition zone after the sealing composition 11 has been applied and compacted, as shown in Figure 1. However, prior to locating the sheath and before or after the sealing composition 11 has been applied, the bared bundle 5 of wires is provided with a heat-protective cover 19 by wrapping glass fibre tape around the bundle in the zone where an end section 17 of the sheath distant from the cable is to be sealed against the bundle of wires.

The sheath is then arranged in the correct position over the transition zone and is shrunk onto the cable jacket 3 at its cable side end section 21. The sheath 15 is thus sealed and fixed to the cable jacket 3 at the end 21 as shown in Figure 2. The shrinking-on of the sheath can be effected in a known manner, in the simplest case by playing an open flame on the end section of the sheath. In the course of shrinking of the sheath 15, the connection piece 9, which protects in a radial direction from the cable, pushes through the material of the sheath 15, which has softened as a result of heating. With the sheath 15 arranged vertically as shown in Figure 2, and with a pocket 23 formed by the sheath by virtue of its sealing attachment only at the cable side end section 21, if a free-flowing or liquid sealing composition is used it may be introduced into the said pocket from the open, top, end thereof.

Figure 3 shows that, as the next step, the sheath 15 is sealed against the heat-protective cover 19 laid round the bundle of wires at the end section 17 remote from the cable. Owing to the heat-shrinkable construction of the sheath 15, sealing is again accomplished, in the simplest manner by fanning the sheath with an open flame.

Figure 4 shows that as the next step the sheath 15 is completely shrunk onto the sealing composition 11 surrounding the bundle of wires. Heat shrinkage is again effected by supplying heat, in the simplest case, as depicted, by fanning with an open flame 25. The shrinking-on is carried out progressively, by starting from the end section 17 remote from the cable and working towards the cable side end section 21 of the sheath 15, so that, as a result of the contraction of the sheath, the sealing composition is always under a pressure acting in the direction of the cable 1 as shown by the arrow headed line 27.

The final stage of the process is shown in Figure 5 with a completely shrunk-on sheath 15. The connection piece 9 has completely pushed through the sheath 15 and is enclosed, in a tight-sealing manner, by the sheath, which it will be remembered softened during the shrinking-on steps.

In similar fashion, it is also possible to guide out of the sheath 15 a thin gas connection tube (not shown) which communicates with the interior of cable 1 not reached by the sealing composition. Such a gas connection tube is not depicted in the drawings.

It is apparent that, in the process described, a considerable amount of heat is supplied to the sheath 15 and the sealing composition 11 which it encloses. If the process makes use of a sealing composition which can be cured at a higher rate by the action of heat, the curing is then necessarily much speeded up, and if a two-component sealing composition is used the heat of reaction liberated by the reaction of the two components even constitutes an additional supply of heat. Since the rate of curing of most curable sealing compositions can be increased by supplying heat, the choice of a suitable sealing composition presents little problem. It is arranged that the curing time of the sealing composition is approximately equal to the cooling time of the sheath and the sealing composition, so that the termination produced is ready for use immediately after cooling, and the cable 1 emerging therefrom can again be speedily put under the operating gas pressure.

**Claims**

1. A process for producing a pressuretight termination of a multi-wire long-distance cable (1) which can be put under gas pressure and which cable (1) has a sealing cable jacket (3) includes removing part of the cable jacket (3) to form a transition zone which contains an end of the partially removed cable jacket (3) and a section of exposed wires (5) emerging from the cable jacket (3), providing a curable sealing composition (11) that is curable at an increased rate upon application of heat (25) on the bared wires in a flexible sheath (15) which sheath is arranged on the cable jacket (3) and is sealed therein, applying pressure on the sealing composition (11) in the direction of the cable (1) and curing the sealing composition (11), characterised in that the sheath (15) is made of a heat-shrinkable material, the sheath (15) is sealed against the bundle of wires (5) at an end section (17) remote from the cable (1) jacket (3) and is then shrunk onto the section of wires and the sealing composition (11) thereon by the application of heat.

2. A process according to Claim 1, characterised in that the heat-shrinkable sheath (15) is sealed against the cable jacket (3) at an end section (21) on the cable side by heat-shrinking.

3. A process according to Claim 1 or 2, characterised in that the heat-shrinkable sheath (15) is sealed against the section of wires at the end section (17) remote from the cable (1) by heat-shrinking.

4. A process according to Claim 3, characterised in that the section of wires is provided with a heat-protective cover (19) in the zone of the end section (17) of the sheath remote from the cable (1).

5. A process according to Claim 4, characterised in that the heat-protective cover (19) is made of glass fibre tape.

6. A process according to any one of the preceding claims, characterised in that the sheath (15) is progressively shrunk starting at the end section (17) thereof remote from the cable (1) and moving towards the end section (21) on the cable side.

7. A process according to any one of the preceding claims, characterised in that a thixotropic sealing composition (11) is used.

8. A process according to any one of the preceding claims, characterised in that a polyurethane-based sealing composition (11) is used.

9. A process according to àny one of the preceding claims, characterised in that a two-component sealing composition (11) is used, and the two components are mixed together immediately before use.

10. A process according to any one of the preceding claims, characterised in that the sheath (15) is placed in position after the sealing composition (11) has been applied.

11. A process according to any one of the preceding claims, characterised in that, after the sealing composition (11) has been applied, the section of wires is compacted with a packing material (13) through which the sealing composition (11) can penetrate.

12. A process according to Claim 11, characterised in that a stringlike packing material (13) is used.

## Patentansprüche

1. Verfahren zum Erzeugen eines druckdichten Abschlusses eines mehradrigen Fernleitungskabels (1), das unter Gasdruck setzbar ist und das (1) einen abdichtenden Kabelmantel (3) besitzt, wobei durch Abnehmen eines Teils des Kabelmantels (3) eine Übergangszone geschaffen wird, die ein Ende des teilweise abgenommenen Kabelmantels (3) und sich aus dem Kabelmantel (3) heraus erstreckende, freiliegende Drähte (5) enthält, auf den freiliegenden Drähten in einer auf dem Kabelmantel (3) angeordneten und auf ihm abgedichteten, flexiblen Hülle (15) eine härtbare Dichtmasse (11) vorgesehen wird, die deren Härtung durch die Zufuhr von Wärme (25) beschleunigbar ist, auf die Dichtmasse (11) ein Druck in der Richtung des Kabels (1) ausgeübt und die Dichtmasse gehärtet wird, wobei die Hülle (15) in einem von dem Mantel (3) des Kabels entfernten Endteil (17) auf dem Bündel von Drähten (5) abgedichtet wird und die Hülle (15) danach durch Zufuhr von Wärme auf die Drähte und die darauf befindliche Dichtmasse (11) aufgeschrumpft wird.

2. Verfahren nach Anspruch 1, dadurch gekennzeichnet, daß die der Wärme schrumpffähige Hülle (15) an ihrem kabelseitigen Endteil (21) durch Aufschrumpfen in der Wärme auf den Kabelmantel (3) abgedichtet wird.

3. Verfahren nach Anspruch 1 oder 2, dadurch gekennzeichnet, daß die in der Wärme schrumpffähige Hülle (15) an ihrem von dem Kabel (1) entfernten Endteil (17) durch Aufschrumpfen in der Wärme auf den Drähten abgedichtet wird.

4. Verfahren nach Anspruch 3, dadurch gekennzeichnet, daß die freiliegenden Drähte im Bereich des von dem Kabel (1) entfernten Endteils (17) der Hülle mit einer Wärmeschutzabdeckung (19) versehen sind.

5. Verfahren nach Anspruch 4, dadurch gekennzeichnet, daß die Wärmeschutzabdeckung (19) aus Faserglasband besteht.

6. Verfahren nach einem der vorhergehenden Ansprüche, dadurch gekennzeichnet, daß die Hülle (15) an ihrem von dem Kabel (1) entfernten Endteil (17) beginnend und zu dem kabelseitigen Endteil (21) hin fortschreitend aufgeschrumpft wird.

7. Verfahren nach einem der vorhergehenden Ansprüche, dadurch gekennzeichnet, daß eine thioxotrope Dichtmasse (11) verwendet wird.

8. Verfahren nach einem der vorhergehenden Ansprüche, dadurch gekennzeichnet, daß eine Dichtmasse (11) auf Polyurethanbasis verwendet wird.

9. Verfahren nach einem der vorhergehenden Ansprüche, dadurch gekennzeichnet, daß eine Zweikomponenten-Dichtmasse (11) verwendet wird und die beiden Komponenten unmittelbar vor dem Gebrauch vermischt werden.

10. Verfahren nach einem der vorhergehenden Ansprüche, dadurch gekennzeichnet, daß die Hülle (15) nach dem Auftragen der Dichtmasse (11) in Stellung gebracht wird.

11. Verfahren nach einem der vorhergehenden Ansprüche, dadurch gekennzeichnet, daß nach dem Auftragen der Dichtmasse (11) die freiliegenden Drähte mit einem Füllstoff (13) zusammengepreßt werden, der von der Dichtmasse (11) durchdringbar ist.

12. Verfahren nach Anspruch 11, dadurch gekennzeichnet, daß ein strangförmiger Füllstoff (13) verwendet wird.

## Revendications

1. Procédé de fabrication d'une tête étanche à la pression d'un câble multiple interurbain ou pour longues communications (1) qui peut être mis sous pression gazeuse et qui comporte une enveloppe de câble étanche (3), ce procédé comprenant l'enlèvement d'une partie de l'enveloppe de câble (3) pour créer une zone de transition contenant une extrémité de l'enveloppe de câble (3) partiellement enlevée et une section de fils exposés (5) sortant de l'enveloppe de câble (3), l'application d'une composition de scellage durcissable, c'est-à-dire durcissable à une allure accrue lors de l'application d'une chaleur (25), sur les fils exposés dans une gaine flexible (15) qui est agencée sur l'enveloppe de câble (3) et est scellée sur celle-ci, l'application d'une pression sur la composition de scellage (11) dans la direction du câble (1) et le durcissement de cette composition de scellage (11), caractérisé en ce que la gaine (15) est faite d'une matière pouvant se contracter à chaud, cette gaine (15) est scellée contre le faisceau de fils (5) à l'endroit d'une section extrême (17) éloignée de l'enveloppe (3) du câble (1), et cette gaine est ensuite amenée à se contracter sur la section de fils et sur la composition de scellage (11) prévue sur cette section de fils, par application de chaleur.

2. Procédé suivant la revendication 1, caractérisé en ce que la gaine (15) pouvant se contracter à chaud est scellée contre l'enveloppe de câble (3) à l'endroit d'une section extrême (21) se situant du côté câble, et ce par contraction à chaud.

3. Procédé suivant la revendication 1 ou 2, caractérisé en ce que la gaine (15) pouvant se contracter à chaud est scellée contre la section de fils à l'endroit de la section extrême (17) éloignée du câble (1), par contraction à chaud.

4. Procédé suivant la revendication 3, caractérisé en ce que la section de fils est pourvue d'une enveloppe (19) de protection contre la chaleur dans la zone de la section extrême (17) de la gaine, qui est éloignée du câble (1).

5. Procédé suivant la revendication 4, caractérisé en ce que l'enveloppe (19) de protection contre la chaleur est faite d'un ruban de fibres de verre.

6. Procédé suivant l'une quelconque des revendications précédentes, caractérisé en ce que la gaine (15) est amenée à se contracter progressivement en partant de sa section extrême (17) éloignée du câble (1) et en se déplaçant vers la section extrême (21) du côté câble.

7. Procédé suivant l'une quelconque des revendications précédentes, caractérisé en ce qu'on utilise une composition de scellage thixotropique (11).

8. Procédé suivant l'une quelconque des revendications précédentes, caractérisé en ce qu'on utilise une composition de scellage (11) à base de polyuréthanne.

9. Procédé suivant l'une quelconque des revendications précédentes, caractérisé en ce qu'on utilise une composition de scellage (11) à deux composants, et en ce que les deux composants sont mélangés ensemble immédiatement avant l'utilisation.

10. Procédé suivant l'une quelconque des revendications précédentes, caractérisé en ce que la gaine (15) est mise en place après application de la composition de scellage (11).

11. Procédé suivant l'une quelconque des revendications précédentes, caractérisé en ce que, après application de la composition de scellage (11), la section de fils est rendue compacte grâce à une matière de bourrage (13) à travers laquelle la composition de scellage (11) peut pénétrer.

12. Procédé suivant la revendication . 11, caractérisé en ce qu'on utilise une matière de bourrage (13) du type en cordons.

FIG.1    FIG.2    FIG.3    FIG.4    FIG.5

0 115 220